# EUROPEAN PATENT APPLICATION

(11) **EP 4 692 027 A1**
(43) Date of publication of application: **11.02.2026**
(21) Application number: 24932832.9
(22) Date of filing: 28.10.2024
(51) Int. Cl.: C04B 35/634, C08G 64/02

(54) **BINDER FOR FIRING AND PASTE COMPOSITION FOR FIRING**

(30) Priority: 29.03.2024 JP 2024058156
(71) Applicant: LINTEC CORPORATION, Itabashi-ku Tokyo 173-0001 (JP)
(72) Inventor: AJINO Keiko, Tokyo 173-0001 (JP); HAYASAKA Ryohei, Tokyo 173-0001 (JP); MORIOKA Takashi, Tokyo 173-0001 (JP); WATANABE Yasutaka, Tokyo 173-0001 (JP); GODA Hideki, Kobe-shi, Hyogo 651-0093 (JP)
(74) Representative: J A Kemp LLP
(86) International application number: PCT/JP2024/038405
(87) International publication number: WO 2025/203810

(57) **Abstract**

A binder for firing that contains an aliphatic polycarbonate having a carbonate structure in a main chain and a hydrocarbon group whose carbon number is 2 to 8 in a side chain. The above aliphatic polycarbonate preferably has a structural unit represented by General Formula (1a) below. 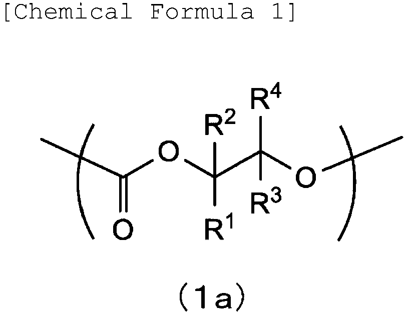 (In the formula, R¹, R², R³, and R⁴ are each independently a hydrogen atom or a hydrocarbon group, and at least one is a hydrocarbon group whose carbon number is 2 to 8.)

The above binder for firing does not leave behind any solid carbon compound derived from the binder in the sintered body, can use carbon dioxide as a production raw material, does not substantially emit carbon dioxide during the firing, and has high adhesion to metals.

## Description

### Technical Field

The present invention relates to a binder for firing and a paste composition for firing.

### Background Art

Sintered bodies obtained by sintering inorganic powders such as metal powders and ceramic powders have heretofore been used in various fields, for example, for producing electrodes, conductor wirings, multilayer capacitors, etc. in various electronic devices.

To produce a sintered body as above, a paste composition for firing, which is a mixture of inorganic powder and a binder for firing, is formed into a desired shape, preheated as necessary, and then fired to sinter the inorganic powder.

As an example of such a binder for firing as above, Patent Document 1 proposes a low-temperature baking-type binder resin composition comprising 100 pts.wt. of a (meth)acrylate polymer (A) having a functional group which can make a hydrogen bond with a hydroxy group, 20 to 200 pts.wt. of an organic compound (B) having 3 or more hydroxy groups, and 100 pts.wt. of an organic solvent (C) having a boiling point of 150°C or more.

### Prior Art Documents

### Patent Documents

Patent Document 1: JP2006-160791A

### Summary of the Invention

### Problems to be solved by the Invention

With such an acrylic-based binder for firing as in Patent Document 1, however, there is a problem in that solid carbon compounds remain in the sintered body after firing.

In addition, depending on the use application of the sintered body, adhesion to a metal member (e.g., copper, aluminum, etc.) with which the sintered body or binder for firing comes into contact may be required. Unfortunately, however, the acrylic-based binder for firing as in Patent Document 1 has low adhesion to metals, and it is necessary to use additives or the like to improve adhesion.

In recent years, global warming and the resulting environmental destruction have become serious issues, and carbon dioxide is thought to be one of the main causes. It can therefore be said that suppressing carbon dioxide emissions in the process of making various materials and effectively utilizing the carbon dioxide emitted will help protect the environment.

The present invention has been made in consideration of such circumstances as above, and an object of the present invention is to provide a binder for firing and a paste composition for firing that do not leave behind any solid carbon compound derived from the binder in the sintered body, can use carbon dioxide as a production raw material, do not substantially emit carbon dioxide during the firing, and have high adhesion to metals.

### Means for solving the Problems

To achieve the above object, first, the present invention provides a binder for firing comprising an aliphatic polycarbonate having a carbonate structure in a main chain and a hydrocarbon group whose carbon number is 2 to 8 in a side chain (Invention 1).

When the above aliphatic polycarbonate in the above invention (Invention 1) is decomposed by firing, the main product is cyclic carbonate; therefore, carbon dioxide is not substantially emitted during firing, and no solid carbon compound derived from the binder remains in the sintered body. Moreover, the cyclic carbonate, which is the product, can be reused as a solvent or electrolyte for lithium ion batteries. Furthermore, the above aliphatic polycarbonate resin can be produced using carbon dioxide as a production raw material, and carbon dioxide can therefore be effectively utilized. In addition, since the above aliphatic polycarbonate has a hydrocarbon group whose carbon number is 2 to 8 in a side chain, the glass-transition temperature can readily be lowered to room temperature or lower, and the wettability to an adherend can be improved, so that excellent adhesion to metals is exhibited at room temperature.

In the above invention (Invention 1), the 99% thermal decomposition temperature in an atmosphere having an oxygen concentration of 5% or less may be preferably 400°C or lower (Invention 2).

In the above invention or inventions (Inventions 1 and 2), the adhesion strength measured when, from an aluminum plate formed with a layer composed of the binder for firing having a thickness of 20 µm, the layer of the binder for firing is peeled off at a peeling angle of 180° and a peeling speed of 300 mm/min may be preferably 0.3 N/25 mm or more (Invention 3).

In the above invention or inventions (Inventions 1 to 3), the hydrocarbon group whose carbon number is 2 to 8 may be preferably a linear hydrocarbon group (Invention 4).

In the above invention or inventions (Inventions 1 to 4), the aliphatic polycarbonate may preferably have a structural unit represented by General Formula (1a) below (Invention 5). 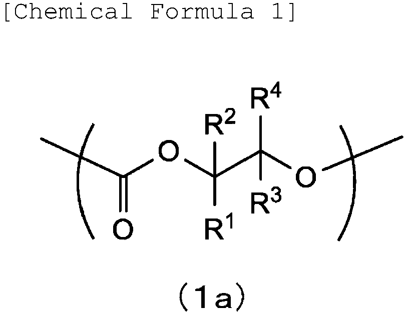 (In the formula, R¹, R², R³, and R⁴ are each independently a hydrogen atom or a hydrocarbon group, and at least one is a hydrocarbon group whose carbon number is 2 to 8.)

In the above invention or inventions (Inventions 1 to 5), preferably, the binder for firing may be used for forming a metal oxide precursor sintered body or for forming a metal oxide sintered body (Invention 6, 7), or may be used for use of forming a metal oxide precursor sintered foil on a base material or for use of forming a metal oxide sintered foil on a base material (Invention 8, 9).

In the above invention or inventions (Inventions 1 to 9), the storage elastic modulus at 23°C may be preferably 50 MPa or less (Invention 10).

In the above invention or inventions (Inventions 1 to 10), the glass-transition temperature (Tg) may be preferably 25°C or lower (Invention 11).

In the above invention or inventions (Inventions 1 to 11), the binder for firing may preferably have a breaking elongation of 100% or more when formed to have a thickness of 0.5 mm and a width of 10 mm and stretched at a measurement temperature of 23°C, a measurement length of 10 mm, and a tensile speed of 200 mm/min (Invention 12).

In the above invention or inventions (Inventions 1 to 12), the binder for firing may preferably have a maximum stress of 10 MPa or less when formed to have a thickness of 0.5 mm and a width of 10 mm and stretched to the breaking elongation at a measurement temperature of 23°C, a measurement length of 10 mm, and a tensile speed of 200 mm/min (Invention 13).

Second, the present invention provides a paste composition for firing comprising a metal oxide precursor powder or a metal oxide powder and the binder for firing (Invention or inventions 1 to 13) (Invention 14).

In the present specification, the term "metal oxide precursor" is a general term for a substance that can become a metal oxide when fired under an oxygen atmosphere. However, firing under an oxygen atmosphere is not a prerequisite. In the present specification, the term "metal oxide precursor sintered foil" refers to a composite of a metal oxide precursor sintered body and a foil-like member such as a metal foil, and the term "metal oxide sintered foil" refers to a composite of a metal oxide sintered body and a foil-like member such as metal foil.

### Advantageous Effect of the Invention

The binder for firing and paste composition for firing according to the present invention do not leave behind any solid carbon compound derived from the binder in the sintered body, can use carbon dioxide as a production raw material, do not substantially emit carbon dioxide during the firing, and have high adhesion to metals.

### Embodiments for Carrying out the Invention

Hereinafter, one or more embodiments of the present invention will be described.

### <Binder for Firing>

The binder for firing according to an embodiment of the present invention (which may be referred to as a "binder for firing B," hereinafter) contains an aliphatic polycarbonate (which may be referred to as "aliphatic polycarbonate A," hereinafter) that has a carbonate structure in the main chain and a hydrocarbon group whose carbon number is 2 to 8 in a side chain.

When the aliphatic polycarbonate A is decomposed by firing, the main product is cyclic carbonate; therefore, carbon dioxide is not substantially emitted during firing, and no solid carbon compound derived from the binder remains in the sintered body. Moreover, the cyclic carbonate, which is the product, can be reused as a solvent or electrolyte for lithium ion batteries. Furthermore, as will be described later, the aliphatic polycarbonate resin A can be produced using carbon dioxide as a production raw material, and carbon dioxide can therefore be effectively utilized.

In addition, since the aliphatic polycarbonate A has a hydrocarbon group whose carbon number is 2 to 8 in a side chain, the glass-transition temperature can readily be lowered to room temperature or lower, and the wettability to an adherend can be improved, so that excellent adhesion to metals is developed at room temperature. Specifically, the adhesion between the paste composition for firing using the binder for firing B and a metal member, the adhesion between the metal oxide precursor powders to each other in the paste composition for firing containing the binder for firing B and the metal oxide precursor powder, and the adhesion between the metal members to each other via the binder for firing B (paste composition for firing) can be excellent. When the hydrocarbon group in a side chain of the aliphatic polycarbonate A is only one whose carbon number is 0 or 1, the adhesion to an adherend may be low at room temperature.

The aliphatic polycarbonate A has a carbonate structure in the main chain, and it thereby exhibits low-temperature decomposability due to a specific reaction, specifically a back-biting reaction. According to the binder for firing B of the embodiment, therefore, firing can be performed at a relatively low temperature. The low-temperature decomposability of the aliphatic polycarbonate A may be exhibited not only in air but also in an inert atmosphere. Thus, even when a metal that is readily oxidized in firing in air is present, firing can be performed at a relatively low temperature in an inert atmosphere while preventing the oxidation of the metal.

The 99% thermal decomposition temperature of the aliphatic polycarbonate A in an atmosphere having an oxygen concentration of 5% or less may be preferably 400°C or lower, also preferably 380°C or lower, more preferably 350°C or lower, particularly preferably 320°C or lower, and further preferably 310°C or lower. It can thus be said that the low-temperature decomposability of the aliphatic polycarbonate A is excellent even in an inert atmosphere, and firing can be performed at a relatively low temperature even in an inert atmosphere. In the present embodiment, the use of the aliphatic polycarbonate A allows the 99% thermal decomposition temperature as above to be achieved. The lower limit of the above 99% thermal decomposition temperature is not particularly limited, but may be preferably 170°C or higher, particularly preferably 200°C or higher, and further preferably 230°C or higher from the viewpoint of volatilizing the solvent at a temperature equal to or higher than its boiling point after coating with the slurry. Measurement of the thermal decomposition temperature in the present specification may be performed by thermogravimetric analysis (TGA), and the details are as exhibited in the testing example, which will be described later.

The 50% thermal decomposition temperature of the aliphatic polycarbonate A in an atmosphere having an oxygen concentration of 5% or less may be preferably 340°C or lower, also preferably 330°C or lower, more preferably 320°C or lower, particularly preferably 310°C or lower, and further preferably 300°C or lower. The lower limit of the above 50% thermal decomposition temperature is not particularly limited, but may be preferably 165°C or higher, particularly preferably 195°C or higher, and further preferably 225°C or higher.

The 10% thermal decomposition temperature of the aliphatic polycarbonate A in an atmosphere having an oxygen concentration of 5% or less may be preferably 335°C or lower, also preferably 325°C or lower, more preferably 315°C or lower, particularly preferably 305° C or lower, and further preferably 295°C or lower. The lower limit of the above 10% thermal decomposition temperature is not particularly limited, but may be preferably 160°C or higher, particularly preferably 190°C or higher, and further preferably 220°C or higher.

The 5% thermal decomposition temperature of the aliphatic polycarbonate A in an atmosphere having an oxygen concentration of 5% or less may be preferably 330°C or lower, also preferably 320°C or lower, more preferably 310°C or lower, particularly preferably 300°C or lower, and further preferably 290°C or lower. The lower limit of the above 5% thermal decomposition temperature is not particularly limited, but may be preferably 155°C or higher, particularly preferably 185°C or higher, and further preferably 215°C or higher.

The 99% thermal decomposition temperature of the aliphatic polycarbonate A in air may be preferably 400°C or lower, also preferably 380°C or lower, more preferably 350°C or lower, particularly preferably 320°C or lower, and further preferably 310°C or lower. It can thus be said that the low-temperature decomposability of the aliphatic polycarbonate A is excellent, and firing can be performed at a relatively low temperature. In the present embodiment, the use of the aliphatic polycarbonate A allows the 99% thermal decomposition temperature as above to be achieved. The lower limit of the above 99% thermal decomposition temperature is not particularly limited, but may be preferably 170°C or higher, particularly preferably 200°C or higher, and further preferably 230°C or higher from the viewpoint of volatilizing the solvent at a temperature equal to or higher than its boiling point after coating with the slurry.

The 50% thermal decomposition temperature of the aliphatic polycarbonate A in air may be preferably 340°C or lower, also preferably 330°C or lower, more preferably 320°C or lower, particularly preferably 310°C or lower, and further preferably 300°C or lower. The lower limit of the above 50% thermal decomposition temperature is not particularly limited, but may be preferably 165°C or higher, particularly preferably 195°C or higher, and further preferably 225°C or higher.

The 10% thermal decomposition temperature of the aliphatic polycarbonate A in air may be preferably 335°C or lower, also preferably 325°C or lower, more preferably 315°C or lower, particularly preferably 305° C or lower, and further preferably 295°C or lower. The lower limit of the above 10% thermal decomposition temperature is not particularly limited, but may be preferably 160°C or higher, particularly preferably 190°C or higher, and further preferably 220°C or higher.

The 5% thermal decomposition temperature of the aliphatic polycarbonate A in air may be preferably 330°C or lower, also preferably 320°C or lower, more preferably 310°C or lower, particularly preferably 300°C or lower, and further preferably 290°C or lower. The lower limit of the above 5% thermal decomposition temperature is not particularly limited, but may be preferably 155°C or higher, particularly preferably 185°C or higher, and further preferably 215°C or higher.

The adhesion strength measured when, from an aluminum plate formed with a layer composed of the binder for firing B (thickness of 20 µm), the above layer of the binder for firing B is peeled off at a peeling angle of 180° and a peeling speed of 300 mm/min may be preferably 0.3 N/25 mm or more, more preferably 0.5 N/25 mm or more, particularly preferably 1 N/25 mm or more, and further preferably 5 N/25 mm or more. It can thus be said that the adhesion to metals is high. In the present embodiment, by using the aliphatic polycarbonate A, it is possible to achieve the excellent metal adhesion as above. Although the upper limit for the above adhesion strength is not limited, from the viewpoint of the occurrence of blocking issues when the adhesion strength is unduly high, the upper limit may be preferably 20 N/25 mm or less, particularly preferably 18 N/25 mm or less, and further preferably 15 N/25 mm or less. The adhesion strength in the present specification refers basically to a peel strength that is measured using a method of 180° peeling in accordance with JIS Z0237: 2000, and a specific testing method is as exhibited in the testing example, which will be described later.

Here, the hydrocarbon group whose carbon number is 2 to 8 of the aliphatic polycarbonate A may be preferably a linear hydrocarbon group. This allows the above adhesion strength to more readily be satisfied.

The glass-transition temperature (Tg) of the aliphatic polycarbonate A may be preferably 25°C or lower, particularly preferably 20°C or lower, and further preferably 18°C or lower. This allows excellent adhesion to metals, particularly aluminum, to be developed at room temperature, and the above adhesion strength can readily be achieved. In the present embodiment, by using the aliphatic polycarbonate A having a side chain hydrocarbon group whose carbon number is 2 to 8, it is possible to achieve the low glass-transition temperature (Tg) as above. From the viewpoint of film strength, the above glass-transition temperature (Tg) may be preferably -40°C or higher, more preferably -30°C or higher, particularly preferably -20°C or higher, and further preferably -10°C or higher. In the present specification, the glass-transition temperature (Tg) is measured by differential scanning calorimetry (DSC), and the details are as exhibited in the testing example, which will be described later.

The weight-average molecular weight (Mw) of the aliphatic polycarbonate A may be preferably 5,000 to 1,000,000, more preferably 8,000 to 800,000, particularly preferably 10,000 to 500,000, and further preferably 30,000 to 350,000. This allows the above-descrived physical properties to readily be satisfied. In the present specification, the weight-average molecular weight (Mw) and number-average molecular weight (Mn) described below each refer to a standard polystyrene equivalent value measured by a gel permeation chromatography (GPC) method.

The number-average molecular weight (Mn) of the aliphatic polycarbonate A may be preferably 2,000 to 300,000, more preferably 5,000 to 250,000, particularly preferably 10,000 to 200,000, and further preferably 20,000 to 150,000. This allows the above-described physical properties to readily be satisfied.

The storage elastic modulus of the aliphatic polycarbonate A at 23°C may be preferably 50 MPa or less, more preferably 40 MPa or less, particularly preferably 30 MPa or less, and further preferably 20 MPa or less. This allows excellent adhesion to metals, particularly aluminum, to be developed at room temperature, and the above adhesion strength can readily be achieved. The lower limit of the above storage elastic modulus may be preferably 0.005 MPa or more, more preferably 0.01 MPa or more, particularly preferably 0.05 MPa or more, and further preferably 0.1 MPa or more. This allows excellent adhesion to metals, particularly aluminum, to be held at room temperature, and the above adhesion strength can readily be achieved. In the present specification, the method of measuring the storage elastic modulus is as exhibited in the testing example, which will be described later.

When a tensile test is performed such that the aliphatic polycarbonate A is formed to have a thickness of 0.5 mm and a width of 10 mm and stretched at a measurement temperature of 23°C, a measurement length of 10 mm, and a tensile speed of 200 mm/min, the breaking elongation may be preferably 100% or more, more preferably 1,000% or more, particularly preferably 3,000% or more, and further preferably 5,000% or more. This results in excellent flexibility and a high degree of freedom in designing the shape of the sintered body obtained. The specific method for the above tensile test is as exhibited in the testing example, which will be described later.

When the aliphatic polycarbonate A is subjected to the above tensile test and stretched to the breaking elongation, the maximum stress may be preferably 10 MPa or less, more preferably 7 MPa or less, particularly preferably 5 MPa or less, and further preferably 3 MPa or less. This results in excellent flexibility and a high degree of freedom in designing the shape of the sintered body obtained. The lower limit of the above maximum stress may be preferably 0.01 MPa or more. This can ensure the strength required when preparing the paste for firing.

### 1. Components

The components contained in the binder for firing B according to the present embodiment will be described below.

### (1) Aliphatic Polycarbonate

### (1-1) Structure of Aliphatic Polycarbonate

The aliphatic polycarbonate A used in the binder for firing B may be a polycarbonate whose main chain is composed only of a carbonate group (-O-C(=O)-O-) and an aliphatic group, and has a structure in which the divalent aliphatic groups that constitute the main chain are linked by the carbonate group.

The above aliphatic polycarbonate A may have a carboxylic ester bond (-C(=O)-O-) in its main chain, but preferably may not have that. When the aliphatic polycarbonate A does not have a carboxylic ester bond in its main chain, the above aliphatic polycarbonate A does not include a polymer having a polycarbonate skeleton obtained by forming an ester bond in the main chain through reaction of a carboxylic acid or its derivative with an alcohol. Here, examples of derivatives of carboxylic acid include carboxylic acid anhydrides and carboxylic acid halides capable of forming ester bonds.

The above aliphatic polycarbonate A may further have a urethane bond (-NH-C(=O)-O-) in its main chain, but preferably may not have that. When the aliphatic polycarbonate A does not have a urethane bond in the main chain, the above aliphatic polycarbonate A does not include a polymer having a polycarbonate skeleton obtained by forming a urethane bond in the main chain through reaction of a compound having an isocyanate group with an alcohol.

The above aliphatic polycarbonate A may further have an ether bond (-O-) in its main chain.

The aliphatic polycarbonate A may have either or both of a carboxylic ester bond and a urethane bond in its side chain, or may not have them. However, from the viewpoint of preventing metal corrosion, it is preferred that the aliphatic polycarbonate A should not have a carboxylate bond in its side chain.

Examples of the above aliphatic polycarbonate A include those having a structural unit represented by General Formula (1) below. 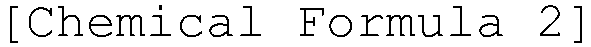 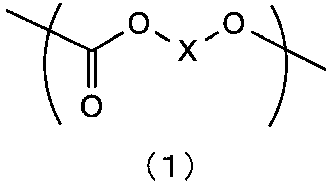 (In the formula, X is a divalent aliphatic hydrocarbon group that has a substituent.)

In the formula, X is a divalent aliphatic hydrocarbon group that has a substituent, and the aliphatic hydrocarbon group may be any of a linear one, a branched one, and a cyclic one, and may have both a chain structure and a cyclic structure. Cyclic aliphatic hydrocarbon groups may be monocyclic or polycyclic.

In X, the aliphatic hydrocarbon group that has a "substituent" refers to an aliphatic hydrocarbon group in which one or more hydrogen atoms are substituted with a group (substituent) other than a hydrogen atom.

The substituent of the above aliphatic hydrocarbon group is not particularly limited, but examples thereof include hydroxyl groups, halogen atoms, alkoxy groups, alkenyl groups, alkenyloxy groups, aryl groups, heteroaryl groups, aryloxy groups, heteroaryloxy groups, alkylsilyl groups, and alkylsilyloxy groups. Thus, the above aliphatic polycarbonate may or may not have an aromatic group in a side chain branching from the main chain, provided that the groups other than the carbonate groups constituting the main chain are only aliphatic groups. From the viewpoint of preventing metal corrosion, it is preferred that the aliphatic polycarbonate should not have a carboxy group as a substituent.

Examples of halogen atoms in the above substituents include fluorine atoms, chlorine atoms, bromine atoms, and iodine atoms.

Examples of alkoxy groups in the above substituents include the same alkoxy groups as those in R¹, etc., which will be described later, such as methoxy, ethoxy, n-propoxy, isopropoxy, n-butoxy, isobutoxy, sec-butoxy, tert-butoxy, cyclopropoxy, and cyclobutoxy groups.

Examples of alkenyl groups in the above substituents include the same alkenyl groups as those in R¹, etc., which will be described later, such as vinyl, allyl, 1-methylethenyl, 2-methylethenyl, 1-cyclohexenyl, 2-cyclohexenyl, and 3-cyclohexenyl groups.

Examples of alkenyloxy groups in the above substituents include monovalent groups in which oxygen atoms are bonded to the aforementioned alkenyl groups, such as ethenyloxy, 2-propenyloxy, 1-methylethenyloxy, 2-methylethenyloxy, 1-cyclohexenyloxy, 2-cyclohexenyloxy, and 3-cyclohexenyloxy groups.

The aryl groups in the above substituents may be any of monocyclic ones and polycyclic ones, and may preferably those whose carbon number is 6 to 13. Examples thereof include phenyl, 1-naphthyl, 2-naphthyl, o-tolyl, m-tolyl, p-tolyl, and xylyl (dimethylphenyl), as well as those in which one or more hydrogen atoms of aryl groups are further substituted with these aryl groups or the same alkyl groups as those in R¹, etc., which will be described later. The carbon number of these aryl groups having substituents, including those in the substituents, may be preferably 6 to 13.

The heteroaryl groups in the above substituents may be any of monocyclic ones and polycyclic ones. Such heteroaryl groups may be, for example, those having aromaticity in which one or more carbon atoms constituting the aromatic ring skeleton in the aforementioned aryl groups are substituted with heteroatoms, either alone or together with the hydrogen atoms bonded to the carbon atoms, or those having aromaticity in which one or more carbon atoms constituting the ring skeleton in cyclic unsaturated aliphatic hydrocarbon groups whose carbon number is 3 or more are substituted with heteroatoms, either alone or together with the hydrogen atoms bonded to the carbon atoms. Examples of such heteroatoms include oxygen atoms, nitrogen atoms, sulfur atoms, selenium atoms, and phosphorus atoms. However, from the viewpoints of safety of decomposition products generated during the firing and environmental protection, it is preferred that the heteroaryl groups should not contain heteroatoms other than oxygen atoms, in particular nitrogen atoms and sulfur atoms, because decomposition products containing nitrogen atoms or sulfur atoms may become toxic gases. The number of heteroatoms constituting the aromatic ring skeleton is not particularly limited, but may be preferably 1 to 2. When the number of heteroatoms constituting the aromatic ring skeleton is 2 or more, these multiple heteroatoms may all be the same, all be different, or only some may be the same.

In the present specification, a group having a structure in which an aromatic hydrocarbon group and an aromatic heterocyclic group are condensed will be referred to, for example, as an aromatic heterocyclic group.

Examples of aryloxy groups in the above substituents include monovalent groups in which oxygen atoms are bonded to the aforementioned aryl groups, such as phenoxy, 1-naphthoxy, and 2-naphthoxy groups.

Examples of heteroaryloxy groups in the above substituents include monovalent groups in which oxygen atoms are bonded to the aforementioned heteroaryl groups.

The alkylsilyl groups in the above substituents may be any of monoalkylsilyl groups, dialkylsilyl groups, and trialkylsilyl groups. In such alkylsilyl groupa, the alkyl groups bonded to the silicon atoms may be any of linear, branched, and cyclic groups, and may have both a linear structure and a cyclic structure. The cyclic alkyl groups may be any of monocyclic and polycyclic groups. Examples of the alkyl groups bonded to the silicon atoms include the same alkyl groups as those in R¹, etc., which will be described later.

In the above dialkylsilyl and trialkylsilyl groups, the two or more alkyl groups may be the same or different. In the trialkylsilyl group, the three alkyl groups may all be the same, all may be different, or only two may be the same.

Examples of alkylsilyloxy groups in the above substituents include monovalent groups in which the aforementioned alkylsilyl groups are bonded to oxygen atoms, such as dimethylsilyloxy, ethylmethylsilyloxy, trimethylsilyloxy, ethylmethyl-n-propylsilyloxy, and ethyldimethylsilyloxy groups.

The number of substituents possessed by the aliphatic hydrocarbon group is not particularly limited, and may be one or more, and all hydrogen atoms may be substituted with substituents. The total number of carbon atoms in the substituted aliphatic hydrocarbon group, including those in the substituents, may be 4 or more. From another aspect, the total number of carbon atoms including those in the substituents may be preferably 10 or less, more preferably 8 or less, and particularly preferably 6 or less. When the total number of carbon atoms in the aliphatic hydrocarbon group, including those in the substituents, is within the above range, both the layer formability and the decomposability can be achieved.

When the number of substituents in the above-described aliphatic hydrocarbon groups is 2 or more, these substituents may be the same or different from each other. That is, the two or more substituents may all be the same, all be different, or only some may be the same. The bonding position of the substituent in the above aliphatic hydrocarbon group is not particularly limited, but may be preferably a position in which the terminal portion of the substituent coincides with the terminal portion of the side chain, and it may be a carbon atom constituting the main chain in X, or a carbon atom at the end of the side chain.

The substituted aliphatic hydrocarbon group described above may be preferably a substituted alkylene group, and more preferably a substituted ethylene group. When the aliphatic hydrocarbon group is an alkylene group, particularly an ethylene group, the glass-transition temperature (Tg) of the aliphatic polycarbonate may be lowered, and the low-temperature decomposability can be improved.

The above aliphatic polycarbonate A may preferably have a structural unit represented by General Formula (1a) below (which may be simply referred to as a "structural unit (1a)," hereinafter).

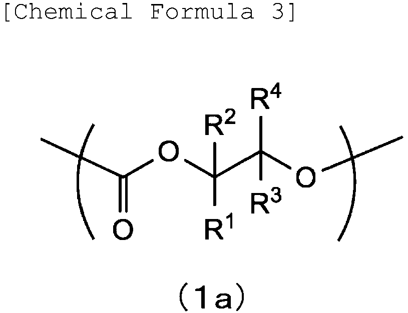

In the formula, R¹, R², R³, and R⁴ are each independently a hydrogen atom or a hydrocarbon group, and at least one is a hydrocarbon group whose carbon number is 2 to 8.

From the viewpoint of decomposability, the carbon number of the above hydrocarbon group whose carbon number is 2 to 8 may be preferably smaller, specifically, 2 may be particularly preferred, and from the viewpoint of adhesion, the carbon number may be preferably larger, specifically, 8 may be particularly preferred.

The above hydrocarbon groups may be preferably independently unsubstituted or substituted alkyl or alkoxy groups. The above hydrocarbon groups (alkyl/alkoxy groups) may be linear, branched, or cyclic, and may have both a chain structure and a cyclic structure, but may be preferably linear from the viewpoint of readily satisfying the aforementioned physical properties, particularly the glass transition temperature (Tg). Cyclic hydrocarbon groups may be either monocyclic or polycyclic.

Examples of linear or branched alkyl groups include ethyl, n-propyl, isopropyl, n-butyl, isobutyl, n-pentyl, isopentyl, n-hexyl, 2-methylpentyl, n-heptyl, 2-methylhexyl, 2-ethylhexyl, n-octyl, and isooctyl groups. Among the above, from the viewpoint of readily satisfying the aforementioned physical properties, particularly the glass transition temperature (Tg), an ethyl group, an n-propyl group, an isopropyl group, an n-butyl group, an isobutyl group, an n-octyl group, or an isooctyl group may be preferred, and an ethyl group or an n-octyl group may be particularly preferred.

Examples of cyclic alkyl groups include cyclopropyl, cyclobutyl, cyclopentyl, cyclohexyl, cycloheptyl, and cyclooctyl groups, and further include those in which one or more hydrogen atoms of these cyclic alkyl groups are substituted with linear, branched, or cyclic alkyl groups. Here, examples of the linear, branched, and cyclic alkyl groups substituting hydrogen atoms include those exemplified above as the alkyl groups in R¹ to R⁴.

Examples of linear of branched alkoxy groups include monovalent groups in which oxygen atoms are bonded to the linear or branched alkyl groups in R¹ to R⁴, such as ethoxy, n-propoxy, isopropoxy, n-butoxy, isobutoxy, sec-butoxy, n-pentyloxy, isopentyloxy, n-hexyloxy, 2-methylpentyloxy, n-heptyloxy, 2-methylhexyloxy, 2-ethylhexyloxy, n-octyloxy, and isooctyloxy groups.

Examples of cyclic alkoxy groups include monovalent groups in which oxygen atoms are bonded to the cyclic alkyl groups in R¹ to R⁴, such as cyclopropoxy, cyclobutoxy, cyclopentyloxy, and cyclohexyloxy groups.

When the alkyl or alkoxy groups in R¹ to R⁴ have substituents, examples of such substituents include hydroxy groups, halogen atoms, alkoxy groups, alkenyl groups, alkenyloxy groups, aryl groups, heteroaryl groups, aryloxy groups, heteroaryloxy groups, alkylsilyl groups, and alkylsilyloxy groups, and these substituents are the same as those of the aforementioned aliphatic hydrocarbon groups when they have substituents.

The number of substituents possessed by the alkyl or alkoxy groups in R¹ to R⁴ is not particularly limited, and may be one, two or more, or all hydrogen atoms may be substituted with substituents. The number of carbon atoms in the alkyl or alkoxy groups having substituents, including those in the substituents, may be preferably within the aforementioned range.

When the alkyl or alkoxy groups in R¹ to R⁴ have substituents and the number of the substituents is two or more, these substituents may be the same or different from each other. That is, two or more substituents may all be the same, all be different, or only some may be the same.

The bonding position of the substituents in the alkyl groups or alkoxy groups is not particularly limited, but in the case of an alkyl group, for example, it may be preferably the terminal portion (the carbon atom at the end of the alkyl group opposite the carbon atom bonded to the ethylene group) .

In the case of alkyl groups having substituents, examples of R¹ to R⁴ having substituents include hydroxyalkyl, haloalkyl, alkoxyalkyl, arylalkyl, heteroarylalkyl, aryloxyalkyl, heteroaryloxyalkyl, alkylsilylalkyl, and alkylsilyloxyalkyl groups. When R¹ to R⁴ other than alkyl groups have substituents, example thereof include those in which the hydrogen atoms are similarly substituted with substituents.

In the structural unit (1a), it is preferred that at least one of R¹ to R⁴, particularly preferably one of R¹ to R⁴, should be an alkyl group whose carbon number is 2 to 8, and from the viewpoint of decomposability, a smaller number of carbon atoms may be preferred, specifically an alkyl group whose carbon number is 2 may be particularly preferred, and from the viewpoint of adhesion, a larger number of carbon atoms may be preferred, specifically an alkyl group whose carbon number is 8 may be particularly preferred. When one of R¹ to R⁴ is an alkyl group whose carbon number is 2 to 8, the remainder may be preferably hydrogen atoms.

In the present embodiment, the structural unit possessed by the aliphatic polycarbonate A may be only one type or two or more types, and when there are two or more types, the combination and ratio thereof can be appropriately selected according to the purpose. For example, when the aliphatic polycarbonate A has the structural unit (1a), the aliphatic polycarbonate A may or may not have a structural unit other than the structural unit (1a). The aliphatic polycarbonate A may have only one type of structural unit (1a) or two or more types, and the structural units other than the structural unit (1a) may also be only one type or two or more types.

The aliphatic polycarbonate A in the present embodiment may be preferably one in which the ratio of the amount of the structural unit (1a) to the total amount of the structural units is 90 mol% or more, more preferably 95 mol% or more, further preferably 97 mol% or more, particularly preferably 99 mol% or more, and may be 100 mol%.

Specifically, the aliphatic polycarbonate A in the present embodiment may be preferably polybutylene carbonate, a polybutylene carbonate derivative, polydecylene carbonate, or a polydecylene carbonate derivative. The binder for firing B using the aliphatic polycarbonate A is more likely to satisfy the aforementioned physical properties, particularly the thermal decomposition temperature and adhesion strength.

### (1-2) Method of producing Aliphatic Polycarbonate

The aliphatic polycarbonate A used in the present embodiment can be produced, for example, by a production method having a step of polymerizing carbon dioxide (CO₂) and a monomer that polymerizes so as to constitute the main chain of an aliphatic group under the presence of a metal catalyst, while controlling the water content to a predetermined amount or less as necessary. For example, the aliphatic polycarbonate A having the structural unit (1a) can be produced, as described below, by a production method having a step of polymerizing carbon dioxide and a compound represented by General Formula (1b) below (alkylene oxide (epoxide) or a derivative thereof, which may be simply referred to as a "compound (1b)," hereinafter) under the presence of a metal catalyst, while controlling the water content to a predetermined amount or less as necessary (see, for example, "WO 2011/142259"). In the present specification, unless otherwise specified, the term "monomer" refers to a compound that undergoes a polymerization reaction with carbon dioxide so that the main chain is composed of an aliphatic group. The term "derivative" refers to a compound in which one or more hydrogen atoms of the original compound are substituted with a group (substituent) other than a hydrogen atom, and examples of the "substituent" herein include the same as the substituents when the above-described R¹ to R⁴ have the substituents. 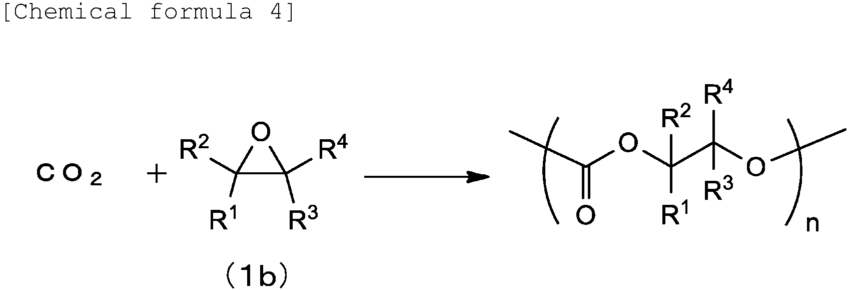 (In the formula, R¹, R², R³, and R⁴ are the same as those described above; n is an integer of 2 or more.)

In the formula, R¹ to R⁴ are the same as R¹ to R⁴ in General Formula (1a) described above. In addition, n is an integer of 2 or more and represents the number of structural units (1a) in the above aliphatic polycarbonate A.

Preferred examples of the compound (1b) include 1-butene oxide, 2-butene oxide, 1,2-butylene oxide, isobutylene oxide, 1-pentene oxide, 2-pentene oxide, 1-hexene oxide, 1-octene oxide, and 1,2-decylene oxide. Among these, the compound (1b) may be more preferably 1,2-butylene oxide, a derivative of 1,2-butylene oxide, 1,2-decylene oxide, or a derivative of 1,2-decylene oxide.

The monomers used in the polymerization reaction step (e.g., compound (1b) and monomers other than compound (1b)) may be only one type or two or more types, and when two or more types are used, the combination and ratio thereof may be appropriately adjusted according to the purpose.

Examples of the metal catalyst used in the polymerization reaction step include cobalt catalysts, aluminum catalysts, zinc catalysts, and double metal cyanide complex catalysts (DMC catalysts). Among these, the metal catalyst may be preferably a cobalt catalyst or MC catalyst and particularly preferably a cobalt salen complex or Zn₃(C0[CN]₆)₂.

The amount of the metal catalyst used during the polymerization reaction may be preferably 0.001 to 10 mass parts and particularly preferably 0.01 to 3 mass parts with respect to 100 mass parts of the monomers used. This allows the polymerization reaction to more readily progress.

In the polymerization reaction step, it is also preferred to use a co-catalyst in addition to the metal catalyst. Examples of the co-catalyst include bis(triphenylphosphoranylidene)ammonium chloride, 4-dimethylaminopyridine, tetrabutylammonium chloride, tetrabutylammonium bromide, triphenylphosphine, 1,5,7-triazabicyclo[4.4.0]dec-5-ene, and 1,4-diazabicyclo[2.2.2]octane.

The amount of the co-catalyst used during the polymerization reaction may be preferably 0.001 to 20 mass parts and particularly preferably 0.01 to 14 mass parts with respect to 100 mass parts of the monomers used. This allows the polymerization reaction to more readily progress.

The method of carrying out the polymerization reaction is not particularly limited, provided that the desired product is obtained. Examples of such a method include a method that includes charging an autoclave with the aforementioned monomers, metal catalyst, and co-catalyst and a solvent as necessary, mixing them, and then injecting carbon dioxide into the obtained mixture to cause reaction.

The solvent used as necessary in the polymerization reaction is not particularly limited, but may be preferably an organic solvent. Examples of organic solvents include aliphatic hydrocarbons such as pentane, hexane, octane, decane, and cyclohexane; aromatic hydrocarbons such as benzene, toluene, and xylene; halogenated hydrocarbons such as chloromethane, dichloromethane, chloroform, carbon tetrachloride, 1,1-dichloroethane, chlorobenzene, and bromobenzene; carboxylic esters such as ethyl acetate, propyl acetate, butyl acetate, and isobutyl acetate; carbonate esters such as dimethyl carbonate, diethyl carbonate, propylene carbonate, and 1,2-butylene carbonate; and lactams such as N-methylpyrrolidone.

The amount of solvent used may be preferably 50 to 10,000 mass parts with respect to 100 mass parts of monomers used from the viewpoint of allowing the polymerization reaction to more readily progress.

The pressure at which carbon dioxide is injected during the polymerization reaction is not particularly limited, but may be preferably 0.1 to 20 MPa, more preferably 0.1 to 10 MPa, and further preferably 0.1 to 5 MPa. By injecting carbon dioxide at a pressure equal to or higher than the above lower limit, the polymerization reaction can more readily progress. Moreover, by injecting carbon dioxide at a pressure equal to or lower than the above upper limit, excessive use of carbon dioxide is suppressed, thus improving economy.

During the polymerization reaction, the amount of water in the reaction system may be preferably set to 5 mol% or less.

The reaction temperature during the polymerization reaction is not particularly limited, but may be preferably 20°C or higher and more preferably 40°C or higher. From another aspect, the reaction temperature during the polymerization reaction may be preferably 100°C or lower and more preferably 80°C or lower. By setting the reaction temperature at or above the above lower limit, the polymerization reaction is completed in a shorter time. Moreover, by setting the reaction temperature at or below the above upper limit, side reactions are suppressed, and the yield of the aliphatic polycarbonate is improved.

The reaction time of the polymerization reaction may be adjusted appropriately depending on the reaction temperature, but may be preferably 2 to 40 hours.

After the polymerization reaction is completed, known post-treatment operations can be performed as necessary, and the target aliphatic polycarbonate A can be taken out by known methods. The obtained aliphatic polycarbonate A may be purified as necessary.

Carbon dioxide is a substance that causes global warming, but on the other hand, it is emitted daily in various industrial fields, and there is a demand for a reduction in emissions on a global scale. In this context, the above-described production method uses carbon dioxide as a raw material, so it can fix carbon dioxide and can be said to be excellent in terms of expanding the options for carbon resources.

The aliphatic polycarbonate A contained in the binder for firing B in the present embodiment may be only one type or two or more types, and when there are two or more types, the combination and ratio thereof can be selected freely depending on the purpose.

### (2) Other Components

In addition to the aliphatic polycarbonate A, the binder for firing B according to the present embodiment may contain various additives, such as an acid/base generator, a sensitizer, and an adhesion promoter, which accelerate the decomposition of the aliphatic polycarbonate A, provided that they do not impair the desired low-temperature decomposability or adhesion or the firing performance.

### 2. Use Application

The binder for firing B according to the present embodiment can be used for firing various metals and ceramics, and may be preferably used for firing metal oxide precursors (production of metal oxide sintered bodies). As described previously, the metal oxide precursor is a general term for a substance that can become a metal oxide when fired under an oxygen atmosphere, and preferred examples thereof include simple metals or alloys such as gold, silver, copper, aluminum, nickel, and tungsten; metal carbides such as silicon carbide; and metal nitrides such as silicon nitride and aluminum nitride.

The binder for firing B according to the present embodiment may also be preferably used for forming a metal oxide precursor sintered body or metal oxide precursor sintered foil on a base material, or for forming a metal oxide sintered body or metal oxide sintered foil on a base material. Preferred examples of base materials include a metal oxide precursor member (including the concept of a metal oxide precursor foil), and a simple metal member such as copper or aluminum may be particularly preferred.

As described previously, the binder for firing B according to the present embodiment has high adhesion to metals, and a composite of a metal member and a metal sintered body or a metal oxide sintered body can therefore be efficiently and easily produced with high accuracy. Examples of such composites include a composite of an aluminum member and an aluminum sintered body, a composite of a copper member and an alumina sintered body, a composite of an alumina member and a copper sintered body, and a composite of an alumina member and a tungsten sintered body.

The composite of an aluminum member and an aluminum sintered body can be suitably used, for example, as an electrode material for an aluminum electrolytic capacitor. In this case, the aluminum member may be preferably an aluminum base material, particularly an aluminum base material composed of aluminum foil (aluminum foil base material). The electrode material for an aluminum electrolytic capacitor may be preferably configured such that an aluminum sintered body is formed on one or both surfaces of the aluminum base material.

The composite of a copper member and an alumina sintered body can be suitably used, for example, as the substrate for a power module. In this case, the copper member may be preferably a copper base material, particularly a copper base material composed of copper foil (copper foil base material). The substrate for a power module may be preferably configured such that an alumina sintered body is formed on one or both surfaces of the copper base material.

The composite of an alumina member and a copper sintered body can be suitably used, for example, as a member for power semiconductor. In this case, the alumina member may be preferably an alumina base material. The member for a power semiconductor may be preferably configured such that a copper sintered body is formed on one or both surfaces of the alumina base material.

### <Paste Composition for Firing>

The paste composition for firing according to the present embodiment (which may be referred to as a "paste composition for firing C," hereinafter) may contain a metal oxide precursor powder and the binder for firing B according to the aforementioned embodiment, and may preferably further contain a solvent.

Preferred examples of the metal oxide precursor powder include gold powder, silver powder, copper powder, aluminum powder, nickel powder, tungsten powder, silicon carbide powder, silicon nitride powder, and aluminum nitride powder. The metal powder may be a powder composed of the metal itself, or a powder composed of an alloy of the metal.

The average particle diameter of the metal oxide precursor powder may be preferably 0.3 to 15 µm, particularly preferably 0.8 to 10 µm, and further preferably 1 to 6 µm. This allows the desired functions to be exhibited well as a metal oxide precursor sintered body/metal oxide sintered body. In the present specification, the average particle diameter of the metal oxide precursor powder can be measured by measuring the powder alone using a laser diffraction/scattering method, and also by observing the cross section of the sintered body using a scanning electron microscope.

The content of the metal oxide precursor powder in the paste composition for firing C may be preferably 30 to 79.5 mass% and particularly preferably 40 to 70 mass%. This allows the metal oxide precursor sintered body to exhibit the desired functions and ensure adhesion to the base material.

The content of the binder for firing B in the paste composition for firing C may be preferably 0.5 to 35 mass% and particularly preferably 0.75 to 10 mass%. This allows the metal oxide precursor sintered body to have excellent adhesion to the base material and to exhibit the desired functions.

The solvent that can be contained in the paste composition for firing C is not particularly limited, and examples thereof include inorganic solvents such as water, and organic solvents such as toluene, alcohols, ketones, and esters. More specifically, examples of the solvent include water, butyl acetate, propylene glycol methyl ether, propylene glycol monomethyl ether acetate, ethyl lactate, butyl cellosolve, and isophorone. These solvents may each be used alone, or two or more types may be mixed and used.

The content of the solvent in the paste composition for firing C may be preferably 20 to 69.5 mass% and particularly preferably 30 to 55 mass%. This can provide excellent coating propertied and moldability, and ensure adhesion to the base material.

The paste composition for firing C may contain other components such as a sintering aid and a surfactant as necessary. The sintering aid is not particularly limited, and for example, fluorides such as aluminum fluoride, potassium fluoride, and calcium fluoride can be used. The surfactant is not particularly limited, and for example, betaine-based, sulfobetaine-based, and alkylbetaine-based surfactants can be used.

To prepare the paste composition for firing C, the metal oxide precursor powder, the binder for firing B, a solvent, and other components as necessary, may be mixed and kneaded.

The paste composition for firing C may be preferably made to have suitable concentration/viscosity for coating or molding by adjusting the amount of the solvent. For example, upon coating, it is preferred to dilute with a solvent so that the solid concentration is 10 to 60 mass%.

### <Sintered Body>

The sintered body according to an embodiment of the present invention may be obtained by firing the paste composition for firing C according to the aforementioned embodiment. This sintered body may be a metal oxide precursor sintered body or a metal oxide sintered body.

The shape of the sintered body according to the present embodiment is not particularly limited, and can be a layer, a plate, a block, or any other desired shape. The sintered body according to the present embodiment may be preferably made into a form bonded to a metal member because it has high adhesion to metals by using the paste composition for firing C containing the binder for firing B.

When the sintered body according to the present embodiment is formed in a layer, the thickness of the sintered body may be preferably, for example, 10 to 500 µm, particularly preferably 20 to 400 µm, and further preferably 30 to 300 µm.

To produce the sintered body according to the present embodiment, first, the paste composition for firing C may be formed into a desired shape. For example, when producing a layered sintered body, it may be preferred to coat a desired object, for example, a metal member with the paste composition for firing C. When producing a plate-shaped or block-shaped sintered body or the like, it may be preferred to fill a desired mold with the paste composition for firing C and mold it.

In any case, it may be preferred to appropriately dry the paste composition for firing C after coating/molding. Examples of drying conditions include a drying condition of drying at a temperature of 20°C to 300°C for 1 to 30 minutes.

Examples of the method of coating with the paste composition for firing C include bar coating, knife coating, doctor blade, screen printing, roll coating, blade coating, die coating, gravure coating, curtain coating, and spray coating methods.

Here, when a metal member is coated with the paste composition for firing C, the layer of the paste composition for firing C develops excellent adhesion to the metal member due to the action of the aliphatic polycarbonate A contained in the paste composition for firing C. This results in very good handling properties, and allows high-precision products to be produced with good yields.

Then, the paste composition for firing C formed into the desired shape may be fired to obtain a sintered body. The firing method is not particularly limited, and examples thereof include a method of heating in a heating furnace.

The firing temperature may be preferably from half the melting point (absolute temperature) of the material to be fired to a temperature below the melting point. This allows the binder for firing B to be thermally decomposed, and the metal oxide precursor powder can be baked to obtain a sintered body. In the present embodiment, the paste composition for firing C uses the binder for firing B containing the aliphatic polycarbonate A, which has excellent low-temperature decomposability, and firing can therefore be performed at a relatively low temperature as described above. Moreover, when laminated on a metal member, the above-described lower limit of the firing temperature provides better adhesion to the metal member. Furthermore, the above-described upper limit of the firing temperature allows the sintered body to readily be obtained with a good shape.

The firing time may be preferably 0.1 to 48 hours, particularly preferably 1 to 36 hours, and further preferably 5 to 24 hours. This allows the metal oxide precursor powder to be sufficiently sintered, and a good sintered body can be obtained.

The sintering atmosphere may be preferably an oxygen-free atmosphere. The oxygen-free atmosphere may be an atmosphere of a single gas, an atmosphere of a mixed gas, or a vacuum atmosphere. Examples of single gases include nitrogen, argon, helium, ammonia, and formaldehyde. Examples of mixed gases include forming gas, and examples of the forming gas include nitrogen gas mixed with 5 vol% or less of hydrogen.

When forming a metal oxide precursor sintered body, an oxygen-free atmosphere may be preferred from the viewpoint of preventing oxidation of the metal oxide precursor powder, and a nitrogen atmosphere may be particularly preferred. The aliphatic polycarbonate A contained in the paste composition for firing C exhibits low-temperature decomposability even in an oxygen-free atmosphere. The sintered body according to the embodiment can therefore be fired at a relatively low temperature while preventing oxidation of the metal.

From the viewpoint of preventing oxidation of the metal, the oxygen concentration in the oxygen-free atmosphere may be preferably 5 vol% or less, more preferably 3 vol% or less, particularly preferably 0.5 vol% or less, and further preferably 0.1 vol% or less.

The pressure condition for the sintering atmosphere may be any of normal pressure, reduced pressure, and increased pressure.

As described previously, when the aliphatic polycarbonate A is decomposed by firing, the main product is cyclic carbonate. Therefore carbon dioxide is not substantially emitted during firing, and no solid carbon compound derived from the binder remains in the sintered body according to the embodiment. Moreover, the cyclic carbonate, which is the product, can be reused as a solvent or electrolyte for lithium ion batteries.

### <Sintered Composite>

The sintered composite according to an embodiment of the present invention may be configured such that a metal sintered body is formed on a base material or a metal oxide sintered body is formed on a base material. A metal member may be preferably used as the base material, and the metal member may be a metal foil. The metal sintered body may be a metal sintered foil, and the metal oxide sintered body may be a metal oxide sintered foil.

Examples of the sintered composite according to the present embodiment include a composite of an aluminum member (aluminum foil base material) and an aluminum sintered body, a composite of a copper member (copper foil base material) and an alumina sintered body, and a composite of an alumina member and a copper sintered body. The use applications of these are as described previously.

It should be appreciated that the aforementioned embodiments are described to facilitate understanding of the present invention and are not described to limit the present invention. It is therefore intended that the elements disclosed in the above embodiments include all design changes and equivalents to fall within the technical scope of the present invention.

In the present specification, unless otherwise specified, the statement of "X to Y" (X and Y are arbitrary numbers) encompasses not only the meaning of "X or more and Y or less" but also the meaning of "preferably more than X" or "preferably less than Y." In addition, unless otherwise specified, the statement of "X or more" (X is an arbitrary number) encompasses the meaning of "preferably more than X," and the statement of "Y or less" (Y is an arbitrary number) encompasses the meaning of "preferably less than Y."

### [Examples]

The present invention will be described in more detail below by exhibiting examples, but the present invention is not limited to the following examples or the like.

### <Production Example 1> (Synthesis of polymerization Catalyst-1)

(R,R)-N,N'-bis(3,5-di-tert-butylsalicylidene)-1,2-diaminocyclohexanecobalt(II) and pentafluorobenzoic acid were weighed out to a molar ratio of 1:1.1 and put into a flask, to which dehydrated toluene was added. The flask was shielded from light with aluminum foil, and the reaction was allowed to progress at room temperature for 20 hours. The chemical reaction formula is as follows. After the reaction was completed, the solvent was removed under reduced pressure, and the reaction product was washed several times with an excess amount of hexane. It was then vacuum dried at room temperature to obtain a cobalt salen complex.

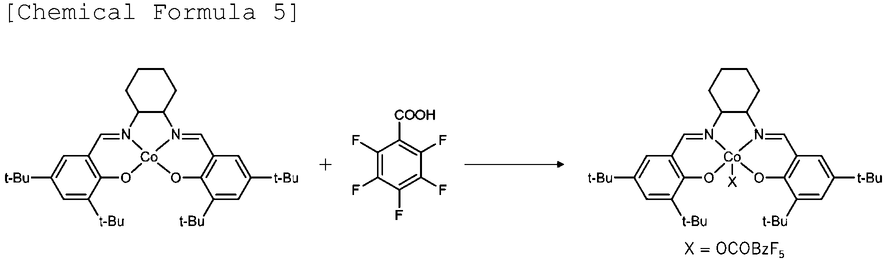

### <Production Example 2> (Synthesis of polymerization Catalyst-2)

First, 1.33 g of potassium hexacyanocobaltate (III) (K₃[Co(CN)₆]) was dissolved in 20 mL of deionized water and added dropwise over 45 minutes to a vigorously stirred 50°C zinc chloride solution (11.42 g of ZnCl₂ dissolved in a mixed solution of 60 mL of deionized water and 30 mL of t-butyl alcohol). The mixture was then vigorously stirred for 60 minutes. The obtained white suspension was centrifuged at 5,000 rpm to isolate a white solid. The isolated white solid was resuspended in a solution of t-butyl alcohol and deionized water (volume ratio of t-butyl alcohol:deionized water=5:5) while being vigorously stirred for 30 minutes. After that, the isolation by centrifugation and resuspension were repeated several times while gradually increasing the amount of t-butyl alcohol relative to water (varying the volume ratio of t-butyl alcohol:deionized water from 6:4 to 7:3, 8:2, and 9:1). Finally, the white solid was resuspended in t-butyl alcohol and then isolated by centrifugation. It was then dried under vacuum at 50°C until a predetermined mass was achieved, and a DMC catalyst Zn₃(Co[CN]₆)₂ was thus obtained.

### <Example 1>

A mixed liquid (solid concentration: 50 mass%) was obtained by dissolving 100 mass parts of 1,2-butylene oxide as a raw material monomer, 0.6 mass parts of the cobalt salen complex obtained in Production Example 1 as a catalyst, and 0.4 mass parts of bis(triphenylphosphoranylidene)ammonium chloride as a co-catalyst in 100 mass parts of ethyl acetate.

After preliminarily replacing the atmosphere inside a 4L autoclave system equipped with a stirrer, a gas inlet tube, and a thermometer with a nitrogen atmosphere, the above mixed liquid was charged. Subsequently, carbon dioxide gas was added while stirring the obtained mixture, and the reaction system was filled with carbon dioxide gas until inside of the reaction system reached 2 MPa. After that, the temperature was raised to 30°C, and the polymerization reaction was carried out for 18 hours while replenishing the carbon dioxide consumed by the reaction. After the reaction was completed, the autoclave was cooled and depressurized, the content was diluted with ethyl acetate, and the catalyst was removed by reprecipitation purification.

The obtained ethyl acetate solution was dried, and the generated aliphatic polycarbonate was acquired. This aliphatic polycarbonate was polybutylene carbonate (PBC). This polybutylene carbonate (PBC) was used as the binder for firing in this example. The carbon number of the hydrocarbon group of the side chain in the polybutylene carbonate is 2.

### <Example 2>

A mixed liquid (solid concentration: 50 mass%) was obtained by dissolving 100 mass parts of 1,2-decilene oxide as a raw material monomer and 0.1 mass parts of DMC catalyst in 100 mass parts of ethyl acetate.

After preliminarily replacing the atmosphere inside a 4L autoclave system equipped with a stirrer, a gas inlet tube, and a thermometer with a nitrogen atmosphere, the above mixed liquid was charged. Subsequently, carbon dioxide gas was added while stirring the obtained mixture, and the reaction system was filled with carbon dioxide gas until inside of the reaction system reached 4 MPa. After that, the temperature was raised to 60°C, and the polymerization reaction was carried out for 18 hours while replenishing the carbon dioxide consumed by the reaction. After the reaction was completed, the autoclave was cooled and depressurized, the content was diluted with ethyl acetate, and the catalyst was removed by reprecipitation purification.

The obtained ethyl acetate solution was dried, and the generated aliphatic polycarbonate was acquired. This aliphatic polycarbonate was polydecylene carbonate (PDC). This polydecylene carbonate (PDC) was used as the binder for firing in this example. The carbon number of the hydrocarbon group of the side chain in the polybutylene carbonate is 8.

### <Comparative Example 1>

Aliphatic polycarbonate was prepared in the same manner as in Example 1 except that propylene oxide was used instead of 1,2-butylene oxide as the raw material monomer. This aliphatic polycarbonate was polypropylene carbonate (PPC). This polypropylene carbonate (PPC) was used as the binder for firing in this example. The carbon number of the hydrocarbon group of the side chain in the polypropylene carbonate is 1.

### <Comparative Example 2>

An acrylic binder for sintering molding (available from Kyoeisha Chemical Co., Ltd., product name "OLYCOX KC-1300") was used as the binder for firing in this example.

### <Comparative Example 3>

An acrylic binder for sintering molding (available from Kyoeisha Chemical Co., Ltd., product name "OLYCOX KC-1700P") was used as the binder for firing in this example.

### <Comparative Example 4>

An acrylic binder for sintering molding (available from Kyoeisha Chemical Co., Ltd., product name "OLYCOX KC-7000F") was used as the binder for firing in this example.

### <Testing Example 1> (Measurement of Molecular Weight)

The weight-average molecular weight (Mw) and number-average molecular weight (Mn) of the binder for firing obtained in each of the examples and comparative examples were measured as a standard polystyrene equivalent value under the following conditions using a gel permeation chromatographic device (available from Tosoh Corporation, product name "HLC-8320"). In addition, the molecular weight distribution (PDI=Mw/Mn) was calculated from the obtained weight-average molecular weight (Mw) and number-average molecular weight (Mn). The results are listed in Table 1.

### «GPC Measurement Conditions»

- Columns: "TSK guard column Super H-H", "TSK gel Super HM-H," "TSK gel Super HM-H," and "TSK gel Super H2000" (all available from Tosoh Corporation) connected in sequence
- Column temperature: 40°C
- Development solvent: Tetrahydrofuran (copolymer concentration 1 mass%)
- Injection volume: 20 µl
- Flow rate: 0.6 mL/min
- Detector: Differential refractometer
- Standard sample: Polystyrene

### <Testing Example 2> (Measurement of Glass-transition Temperature)

The glass-transition temperature (Tg) of the binder for firing obtained in each of the examples and comparative examples was obtained by differential scanning calorimetry (DSC) using a product named "DSC Q2000" available from TA Instruments Japan. Specifically, an aluminum pan was used as a container, and the temperature was raised from -70°C to 150°C at 10.0°C/min under a nitrogen atmosphere, held for 5 minutes, then lowered to -70°C at 10.0°C/min, held for 5 minutes, and then raised to 150°C at 10.0°C/min. The results are listed in Table 1.

### <Testing Example 3> (Measurement of Thermal Decomposition Temperature)

The thermal decomposition temperature of the binder for firing obtained in each of the examples and comparative examples was measured using a thermogravimetric analyzer (TGA; product named "DTG-60" available from SHIMADZU CORPORATION) under the following conditions. Obtained were 5% thermal decomposition temperature in nitrogen (Td5), 10% thermal decomposition temperature in nitrogen (Td10), 50% thermal decomposition temperature in nitrogen (Td50), 99% thermal decomposition temperature in nitrogen (Td99), 5% thermal decomposition temperature in air (Td5), 10% thermal decomposition temperature in air (Td10), 50% thermal decomposition temperature in air (Td50), and 99% thermal decomposition temperature in air (Td99). The results are listed in Table 1.

### «TGA Measurement Conditions»

Heating rate: 10°C/min
Sample amount: 20 to 30 mg
Measurement temperature range: 40°C to 550°C
Measurement atmosphere: Nitrogen/air

The oxygen concentration in the nitrogen atmosphere was 0.1% or less.

### <Testing Example 4> (Evaluation of Remaining Carbon Compounds)

The aluminum pan after TGA measurement under a nitrogen atmosphere in Testing Example 3 was visually observed to confirm the presence or absence of remaining carbon compounds. The remaining carbon compounds were evaluated based on the following criteria. The results are listed in Table 2.
A... The bottom of the aluminum pan was exposed and the metallic luster was able to be confirmed (= no remaining components).
F... Burned ash remained and the bottom of the aluminum pan was not visible.

### <Testing Example 5> (Adhesion Measurement-1)

The binder for firing obtained in each of Examples and Comparative Example 1 was dissolved in toluene to prepare a coating liquid having a solid concentration of 30 mass%. The binder for firing obtained in each of Comparative Examples 2 to 4 was dissolved in ethyl acetate to prepare a coating liquid having a solid concentration of 30 mass%.

An aluminum plate (A1050P, thickness 0.5 mm) as an adherend was coated with the above coating liquid using an applicator, and the coating liquid was then heated and dried at 100°C for 1 minute. Thus, a 20 µm thick, 25 mm wide sintered binder layer was formed on the aluminum plate.

The pressure sensitive adhesive surface of a 25 mm wide polyester pressure sensitive adhesive tape (available from Nitto Denko Corporation, product name "No. 31B") was attached to the binder layer for firing on the above aluminum plate, and a 2 kg roller was rolled back and forth once to ensure adhesion. The tape was then statically placed for 30 minutes under an environment of 23°C and 50% RH, and this was used as a sample.

The above sample was fixed to a tensile tester (available from ORIENTEC Co., LTD., product name "TENSILON"), and under an environment of 23°C and 50% RH (relative humidity), the binder layer for firing was peeled off from the aluminum plate at a tensile speed of 300 mm/min in the 180° direction in accordance with JIS Z0237: 2000. The value measured at that time (N/25 mm) was adopted as the adhesion strength. The results are listed in Table 2.

### <Testing Example 6> (Adhesion Measurement-2)

For each of Examples 1 and 2 and Comparative Example 1, a coating liquid of the paste composition for firing was prepared by mixing 95 mass parts of alumina powder (available from Sumika Alchem Company, Limited, product name "Advanced Alumina AA-2," median diameter 2.2 µm (measured by laser diffraction/scattering method)), 5 mass parts of the binder for firing obtained in each of Examples 1 and 2 and Comparative Example 1, and 54 mass parts of propylene glycol monomethyl ether acetate (PGMEA) as a solvent for 24 hours using zirconia balls (available from AS ONE CORPORATION, product name "ZB-5").

For each of Comparative Examples 2 to 4, a coating liquid of the paste composition for firing was prepared by mixing 95 mass parts of alumina powder (available from Sumika Alchem Company, Limited, product name "Advanced Alumina AA-2," median diameter 2.2 µm (measured by laser diffraction/scattering method)), 5 mass parts of the binder for firing obtained in each of Comparative Examples 2 to 4, and 43 mass parts of a mixed solvent of toluene:n-butanol = 80:20 (mass ratio) as a solvent for 24 hours using zirconia balls (available from AS ONE CORPORATION, product name "ZB-5").

For each of Examples 1 and 2 and Comparative Example 1, aluminum (Al) foil (thickness 20 µm) and copper (Cu) foil (thickness 11 µm) as metal foils were coated with the above coating liquid using an applicator, and the coating liquid was dried by heating at 120°C for 5 minutes. Thus, a paste composition layer for firing having a thickness of 70 µm and a width of 25 mm was formed on each metal foil.

For each of Comparative Examples 2 to 4, aluminum foil (thickness 20 µm) and copper foil (thickness 11 µm) as metal foils were coated with the above coating liquid using an applicator, and the coating liquid was dried by heating at 100°C for 5 minutes. Thus, a paste composition layer for firing having a thickness of 70 µm and a width of 25 mm was formed on each metal foil.

The pressure sensitive adhesive surface of a pressure sensitive adhesive tape (available from LINTEC Corporation, product name "PET50(A)PL Thin 8K") was attached to the paste composition layer for firing on the above metal foil. This laminate was formed into a width of 25 mm×length of 100 mm, attached to a glass plate with double-sided tape, and statically placed for 12 hours in an environment of 23°C and 50% RH, and this was used as a sample.

The above sample was fixed to a tensile tester (available from ORIENTEC Co., LTD., product name "TENSILON"), and under an environment of 23°C and 50% RH (relative humidity), the metal foil was peeled off from the paste composition layer for firing at a tensile speed of 300 mm/min in the 180° direction in accordance with JIS Z0237: 2000. The value measured at that time (mN/25 mm) was adopted as the adhesion strength. The results are listed in Table 2.

The paste composition layers for firing of the examples did not suffer from cohesive failure when peeled off, so it can be said that the binders for firing of the examples have high adhesion to the alumina powder (metal oxide precursor powder).

### <Testing Example 7> (Evaluation of Paste Flexibility)

The laminate of aluminum foil and paste composition layer for firing prepared in Testing Example 6 was wrapped around each of rods having diameters of 1 inch and 3 inches so that the aluminum foil would be inside, and the presence or absence of cracks in the paste composition layer for firing was visually determined. Then, the paste flexibility was evaluated based on the following criteria. The results are listed in Table 2.
A... No cracks occurred when wrapped around the 1-inch rod.
F+... Cracks occurred when wrapped around the 1-inch rod, but no cracks occurred when wrapped around the 3-inch rod.
F-... Cracks occurred when wrapped around both the 1-inch rod and the 3-inch rod.

### <Testing Example 8> (Measurement of Storage Elastic Modulus)

The binder for firing obtained in each of the examples and comparative examples was formed into a cylindrical shape having a diameter of 8 mm and a thickness of 1 mm, and this was used as a sample. A viscoelasticity measuring device (available from Anton Paar, device name "MCR300") was used with a parallel plate of 8 mm diameter as a measurement jig, and the storage elastic modulus (MPa) of the above sample at each temperature was measured by the torsional shear method under the conditions of a test start temperature of -20°C, a test end temperature of 150°C, a heating rate of 3°C/min, a shear strain of 0.05%, and a frequency of 1 Hz. From the measurement results, the storage elastic modulus (MPa) at 23°C was acquired. The results are listed in Table 2.

### <Testing Example 9> (Tensile Test)

The binder for firing obtained in each of the examples and comparative examples was formed into a rectangle of 10 mm width×30 mm length×0.5 mm thickness, and this was used as a sample. The sample was attached to a tensile tester (SHIMADZU CORPORATION, product name "Autograph AG-Xplus") with a chuck distance of 10 mm, and pulled until the sample broke at 23°C and a tensile speed of 200 mm/min. The breaking elongation (%) was measured, and the stress at each elongation was measured to obtain the maximum stress (MPa). The results are listed in Table 2.

**[Table 1]**

| | Molecular weight | | | Glass-transition temperature | Thermal decomposition temperature in nitrogen | | | | Thermal decomposition temperature in air | | | |
|---|---|---|---|---|---|---|---|---|---|---|---|---|
| | Mn | Mw | PDI | [°C] | Td5 [°C] | Td10 [°C] | Td50 [t] | Td99 [°C] | Td5[°C] | Td10 [°C] | Td50 [°C] | Td99 [°C] |
| Example 1 | 71,000 | 86,000 | 1.2 | 16 | 256 | 260 | 277 | 305 | 239 | 250 | 272 | 303 |
| Example 2 | 110,000 | 319,000 | 2.9 | -30 | 253 | 265 | 290 | 352 | 245 | 256 | 280 | 378 |
| Comparative Example 1 | 43,900 | 52,600 | 1.2 | 29 | 238 | 258 | 269 | 349 | 239 | 249 | 277 | 329 |
| Comparative Example 2 | 122,038 | 310,357 | 2.5 | None | 219 | 228 | 258 | 369 | 220 | 228 | 255 | 351 |
| Comparative Example 3 | 57,736 | 102,473 | 1.8 | None | 288 | 299 | 349 | 407 | 264 | 274 | 298 | 356 |
| Comparative Example 4 | 141,373 | 450,041 | 3.2 | None | 340 | 351 | 388 | 551 | 285 | 295 | 335 | 531 |

**[Table 2]**

| | Evaluation of remaining carbon compounds | Adhesion strength [N/25mm] | | | Evaluation of past flexibility | Storage elastic modulus | Breaking elongation | Maximum stress |
|---|---|---|---|---|---|---|---|---|
| | | vs. Al plate (binder alone) | vs. Al foil (containing alumina filler) | vs. Cu foil (containing alumina filler) | | MPa | % | MPa |
| Example 1 | A | 1 | 400 | 300 | A | 16 | >6000 | 1.1 |
| Example 2 | A | 12 | 20 | 40 | A | 0.3 | 5500 | 0.03 |
| Comparative Example 1 | A | 0.1 | 70 | 200 | F + | 920 | 8.7 | 30 |
| Comparative Example 2 | A | 0.1 | 60 | 300 | F - | 730 | 6.5 | 38 |
| Comparative Example 3 | A | 0.1 | 35 | 60 | F - | 710 | 3.2 | 49 |
| Comparative Example 4 | F | 0.1 | 130 | 500 | F - | 840 | 5.8 | 21 |

As found from Tables 1 and 2, the binders for firing produced in the examples decompose at a relatively low temperature, so they can be fired at a relatively low temperature. Moreover, the binders for firing produced in the examples have high adhesion to metal oxide precursor powders and metals. Further, when the binders for firing produced in the examples are fired in an oxygen-free atmosphere, no carbon compounds derived from the binders remain in the sintered bodies. Furthermore, the binders for firing produced in the examples have a low glass-transition temperature, a small storage elastic modulus at room temperature, a large breaking elongation, and a small maximum stress, and the paste composition containing the metal oxide precursor powder is flexible, so that no cracks occur even when wrapped around a rod with a small diameter, and therefore the degree of freedom in designing the shape of a sintered body is high.

### Industrial Applicability

The binder for firing according to the present invention is suitable for producing, for example, a metal oxide precursor sintered body or a metal oxide sintered body, or a composite of these with a metal base material.

## Claims

1. A binder for firing comprising an aliphatic polycarbonate having a carbonate structure in a main chain and a hydrocarbon group whose carbon number is 2 to 8 in a side chain.

2. The binder for firing according to claim 1, wherein its 99% thermal decomposition temperature in an atmosphere having an oxygen concentration of 5% or less is 400°C or lower.

3. The binder for firing according to claim 1, wherein its adhesion strength measured when, from an aluminum plate formed with a layer composed of the binder for firing having a thickness of 20 µm, the layer of the binder for firing is peeled off at a peeling angle of 180° and a peeling speed of 300 mm/min is 0.3 N/25 mm or more.

4. The binder for firing according to claim 1, wherein the hydrocarbon group whose carbon number is 2 to 8 is a linear hydrocarbon group.

5. The binder for firing according to claim 1, wherein the aliphatic polycarbonate has a structural unit represented by General Formula (1a) below: 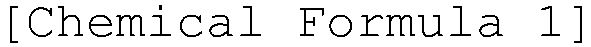 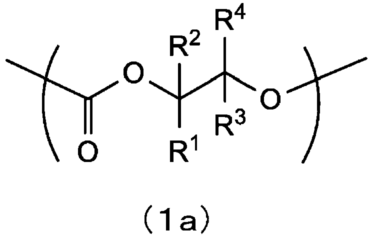 where R¹, R², R³, and R⁴ are each independently a hydrogen atom or a hydrocarbon group, and at least one is a hydrocarbon group whose carbon number is 2 to 8.

6. The binder for firing according to claim 1, wherein it is used for forming a metal oxide precursor sintered body.

7. The binder for firing according to claim 1, wherein it is used for forming a metal oxide sintered body.

8. The binder for firing according to claim 1, wherein it is used for use of forming a metal oxide precursor sintered foil on a base material.

9. The binder for firing according to claim 1, wherein it is used for use of forming a metal oxide sintered foil on a base material.

10. The binder for firing according to claim 1, wherein its storage elastic modulus at 23°C is 50 MPa or less.

11. The binder for firing according to claim 1, wherein its glass-transition temperature (Tg) is 25°C or lower.

12. The binder for firing according to claim 1, wherein it has a breaking elongation of 100% or more when formed to have a thickness of 0.5 mm and a width of 10 mm and stretched at a measurement temperature of 23°C, a measurement length of 10 mm, and a tensile speed of 200 mm/min.

13. The binder for firing according to claim 1, wherein it has a maximum stress of 10 MPa or less when formed to have a thickness of 0.5 mm and a width of 10 mm and stretched to a breaking elongation at a measurement temperature of 23°C, a measurement length of 10 mm, and a tensile speed of 200 mm/min.

14. A paste composition for firing comprising a metal oxide precursor powder and the binder for firing according to any one of claims 1 to 13.
